# EUROPEAN PATENT APPLICATION

(11) **EP 4 629 734 A1**
(43) Date of publication of application: **08.10.2025**
(21) Application number: 25167927.0
(22) Date of filing: 02.04.2025
(51) Int. Cl.: H04W 74/00, H04W 52/02, H04W 74/0833

(54) **METHOD AND APPARATUS OF MANAGING RANDOM ACCESS CHANNEL ADAPTATION FOR ENERGY SAVINGS**

(30) Priority: 03.04.2024 KR 20240045388; 18.03.2025 KR 20250034375
(71) Applicant: KT Corporation, Seongnam-si, Gyeonggi-do 13606 (KR)
(72) Inventor: PARK, Ki-hyeon, 13606 Seongnam-si, Gyeonggi-do (KR)
(74) Representative: BCKIP Part mbB

(57) **Abstract**

Provided are a method and apparatus of managing random access channel adaptation for energy saving in a wireless communication system. The terminal receives random access configuration information from a base station and performs a random access to the base station based on the received random access configuration information. The received random access configuration information includes physical random access channel (PRACH) configuration information related to energy saving.

## Description

### CROSS-REFERENCE TO RELATED THE APPLICATION

This application is based on and claims priority on Patent Application No. 10-2024-0045388 filed on Apr. 3, 2024 and No. 10-2025-0034375 filed on Mar. 18, 2025 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the existing LTE system, has become necessary. Such a next generation 5G system has been developed based on scenarios which are classified into Enhanced Mobile BroadBand (eMBB), Ultra-reliability and low-latency communication (URLLC), Massive Machine-Type Communications (mMTC), and the like.

eMBB, URLLC, and mMTC represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

### SUMMARY

The disclosure is to provide a method and apparatus for efficiently managing random access channel adaptation for energy saving in a wireless communication system.

According to an embodiment, a method of a terminal may be provided for operating in a wireless communication system. The method of the terminal may include receiving random access configuration information from a base station and performing a random access based on the received random access configuration information. Here, the received random access configuration information includes physical random access channel (PRACH) configuration information related to energy savings.

According to another embodiment, a method of a base station may be provided for operating in a wireless communication system. The method of the base station may include transmitting random access configuration information to a terminal, and detecting a random access based on the transmitted random access configuration information. Here, the transmitted random access configuration information includes physical random access channel (PRACH) configuration information related to energy savings.

According to further another embodiment, a terminal may be provided for operating in a wireless communication system. The terminal may include at least one processor, and at least one memory configured to store instructions and operably electrically connectable to the at least one processor, wherein operations performed based on the instructions executed by the at least one processor include: receiving random access configuration information from a base station and performing a random access based on the received random access configuration information. Here, the received random access configuration information includes physical random access channel (PRACH) configuration information related to energy savings.

According to still further another embodiment, a base station may be provided for operating in a wireless communication system. The base station may include at least one processor; and at least one memory configured to store instructions and operably electrically connectable to the at least one processor, wherein operations performed based on the instructions executed by the at least one processor include: transmitting random access configuration information to a terminal, and detecting a random access based on the transmitted random access configuration information. Here, the transmitted random access configuration information includes physical random access channel (PRACH) configuration information related to energy savings.

The energy savings may be network energy savings (NES).

Meanwhile, a plurality of PRACH transmission patterns may be configured by the PRACH configuration information, and the random access may use one of the plurality of PRA CH transmission patterns. Here, for each of the plurality of PRACH transmission patterns, an association with a synchronization signal block (SSB) transmission pattern related to the NES is individually configured.

Furthermore, the PRACH configuration information may include preamble information for a synchronization signal block (SSB) related to the NES.

The random access configuration information may be received by the terminal through at least one of the following, i) a random access channel (RACH)-configuration common (RACH-ConfigCommon) radio resource control (RRC) information element (IE), ii) a RACH-configuration general (RACH- ConfigGeneric) RRC IE, iii) a bandwidth part (BWP)-uplink common (BWP-UplinkCommon) RRC IE, iv) an uplink configuration common (Uplink ConfigCommon) RRC IE, v) an uplink configuration common system information block (SIB) (UplinkConfigComminSIB) RRC IE, vi) a serving cell configuration common (ServingCellConfigCommon) RRC IE, vii) a serving cell configuration common SIB (ServingCellConfigCommenSIB) RRC IE and viii) a system information block 1 (SIB1) RRC message.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7C illustrate the structure of a synchronization signal block (SSB) in NR.
FIG. 8 shows a flowchart showing a method of operating a terminal according to an embodiment.
FIG. 9 shows a flowchart showing a method of operating a base station according to an embodiment.
FIG. 10 is a block diagram showing apparatuses according to an embodiment of the disclosure.
FIG. 11 is a block diagram showing a terminal according to an embodiment of the disclosure.
FIG. 12 is a block diagram of a processor in accordance with an embodiment.
FIG. 13 is a detailed block diagram of a transceiver of a first apparatus shown in FIG. 10 or a transceiving unit of an apparatus shown in FIG. 11.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

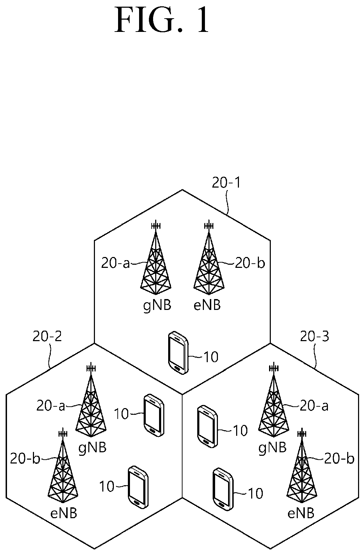

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

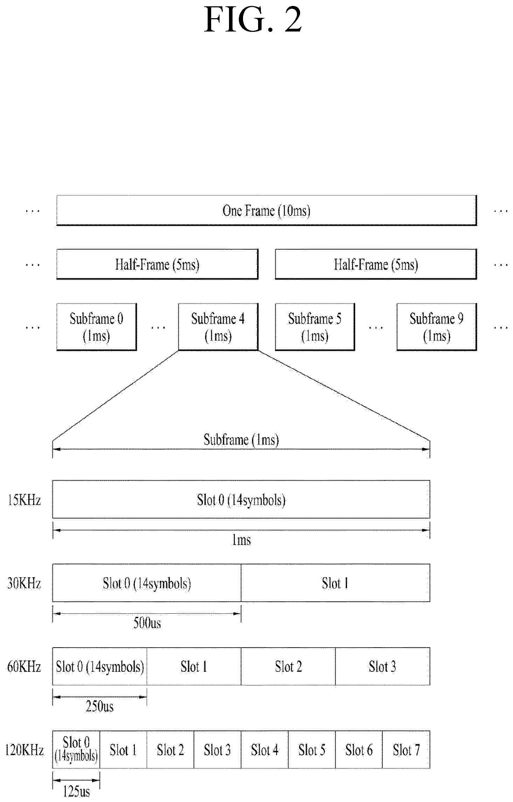

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

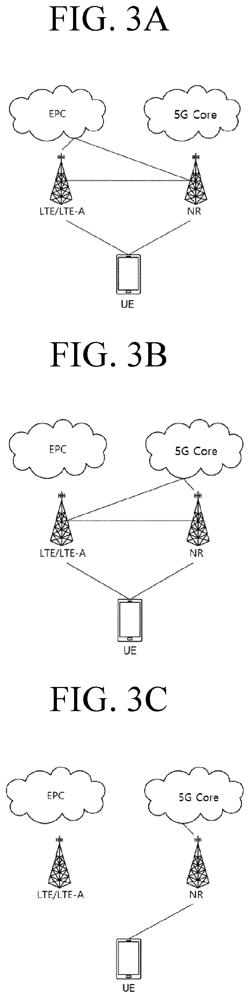

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

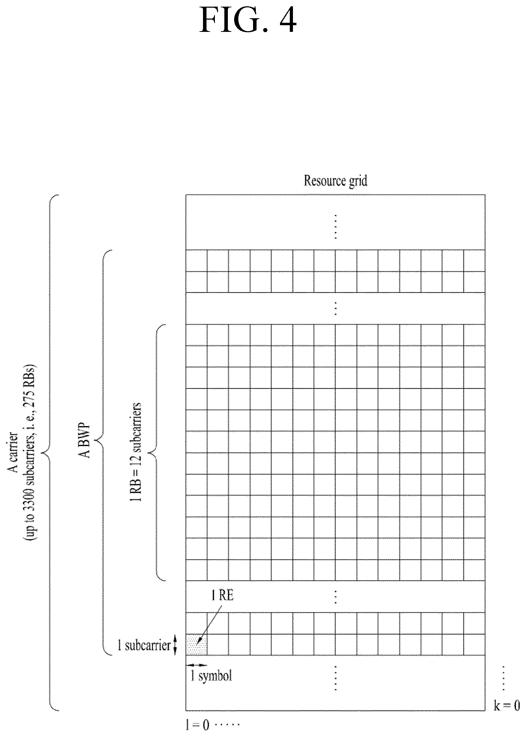

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

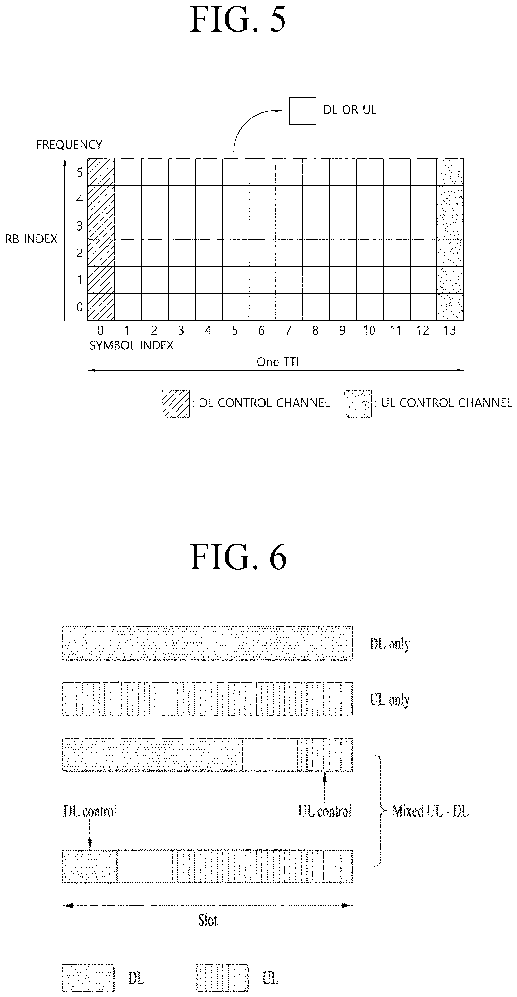

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

### <SSB(synchronization signal block)>

In 5G NR, a synchronization signal/physical broadcast channel block (SS/PBCH Block: SSB) includes information for a UE's an initial access. For example, the information includes a physical broadcast channel (PBCH) with a master information block (MIB) and a synchronization signal (SS) encompassing primary synchronization signal (PSS) and a secondary synchronization signal (SSS).

In addition, a plurality of SSBs may be grouped to form an SS burst, and multiple SS bursts may be grouped to create an SS burst set. Each SSB is typically beamformed in a specific direction, allowing various SS blocks within the SS burst set to accommodate UEs located in different directions.

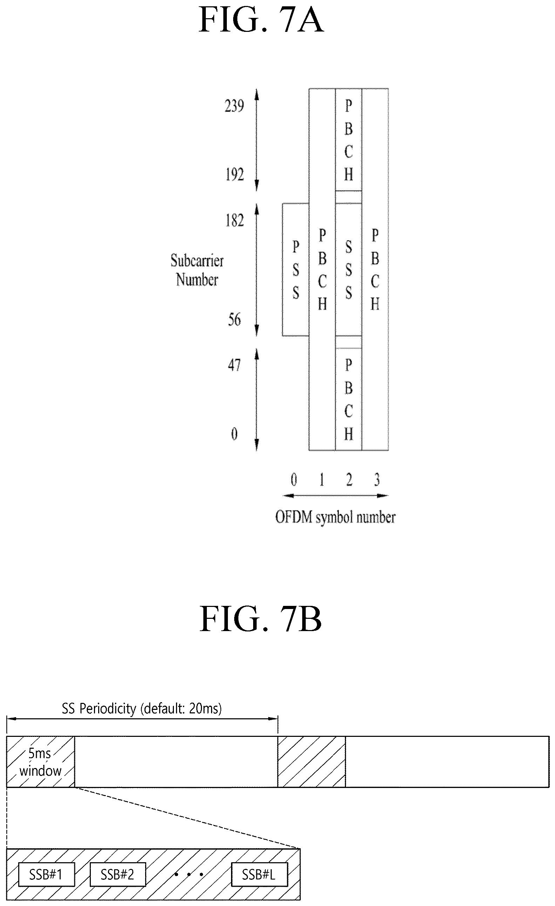

**FIGS. 7A to 7C** **illustrate the structure of a synchronization signal block (SSB) in NR.**

A UE may utilize an SSB for various tasks such as cell search, system information acquisition, beam alignment for initial access, and DL measurement. The term SSB may be used interchangeably with synchronization signal/physical broadcast channel (SS/PBCH).

Referring to FIG. 7A, the SSB includes a primary synchronization signal (PSS), a secondary synchronization signal (SSS), and a physical broadcast channel (PBCH). The SSB is configured in four consecutive orthogonal frequency division multiplexing (OFDM) symbols, and the PSS, the SSS, the SSS/PBCH, and the PBCH are transmitted in the respective OFDM symbols. Each of the PSS and the SSS includes one OFDM symbol and 127 subcarriers, and the PBCH includes three OFDM symbols and 576 subcarriers. The PBCH employs polar coding and quadrature phase shift keying (QPSK). The PBCH includes both data REs and demodulation reference signal (DMRS) REs in each OFDM symbol. There are three DMRS REs per RB, with three data REs interspersed between every two adjacent DMRS REs.

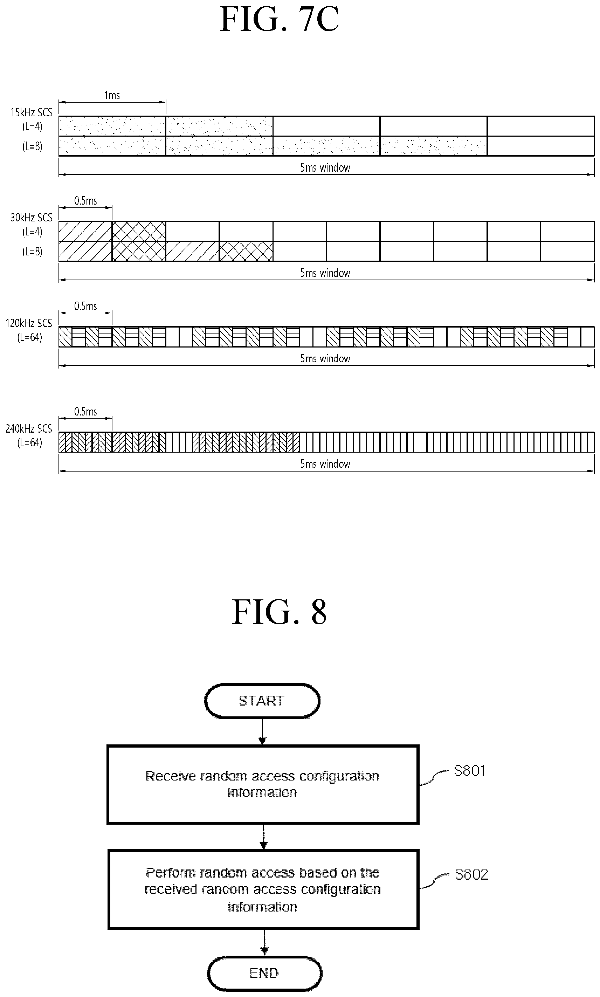

Referring to FIGS. 7B and 7C, an SSB in an SS burst may be transmitted within a 5ms window regardless of the cycle set for the SS burst. The candidate number of SSBs that can fit in the 5 ms window may be denoted as L.

For various frequency bands, the maximum number of L SSBs in the SS burst set may vary as per the following examples (assuming that the minimum number of SSBs in each SS burst set is 1, to define performance requirement).
- frequency band less than 3 GHz: L=4
- frequency band of 3 GHz to 6 GHZ: L=8
- frequency band of 6 GHz to 52.6 GHz: L=64

As shown in FIG. 7B, an SSB cycle may be 20 ms. Specifically, a default value for initial cell selection may be 20 ms. In addition, the SSB cycle in RRC CONNECTED/RRC IDLE and NSA may for example be one of {5,10,20,40,80,160} ms.

FIG. 7C shows the SSB configuration within a 5 ms window. FIG. 7C shows the examples of SSB according to L in subcarrier spacing (SCS) and each SCS. Referring to FIG. 7C, two SSBs may be placed in each patterned area. For example, when L=4 in 15 kHz SCS, two SSBs are positioned in each of two patterned areas. Accordingly, a total of 4 SSBs may be transmitted within the 5 ms window. As another example, when L=64 in 240 kHZ SCS, SSBs are respectively placed in 32 patterned areas. Accordingly, a total of 64 SSBs may be transmitted within the 5 ms window.

In the time domain of the time-frequency structure of an SS/PBCH block, the SSB may be composed of 4 OFDM symbols, and the 4 OFDM symbols may be numbered from 0 to 3 in ascending order in the SSB. In the SSB, PSS, SSS and PBCH (related to DM-RS) may use OFDM symbols.

In the frequency domain, the SSB may include 240 consecutive subcarriers. Here, the subcarriers may be numbered from 0 to 239 in the SSB. Here, K represents a frequency index, l is a time index, and k and l may be defined within one SSB.

The UE may consider SSBs transmitted with the same block index as quasi co-located (QCL) in terms of Doppler spread, Doppler shift, average gain, average delay, and spatial Rx parameters. However, the UE may not regard SSBs transmitted with different block indices as being QCL.

The disclosure provides a method for a terminal (e.g., user equipment: UE) to operate a Physical Random Access Channel (PRACH) to access a base station in a 3GPP NR system. For example, this disclosure provides configuration and management methods to support an environment where the base station configures and operates a PRACH less frequently than the required transmission periodicity defined in the existing standard specifications, particularly when the Network Energy Savings (NES) function is performed.

As described above, in 3GPP NR, at least one SSB is configured to be transmitted within 2 frames, that is, 20 ms, and each SSB includes a system information block 1 (SIB1), which contains information for random access of a terminal and resource location information for receiving accompanying information. The terminal may inform the base station of the information on the selected Tx beam by selecting a qualified SSB through signal measurement on periodically transmitted SSBs and transmitting a physical random access channel (PRACH) preamble mapped for that SSB. The base station constantly attempts blind detection on a random access channel that it configures and on which the terminal is expected to transmit. However, for example, if there is no user, i.e., no terminal, to access the cell, the base station repeatedly performs insignificant detection attempts, resulting in a waste of power. To save such power efficiently, "Enhancements of Network Energy Saving for NR" in NR Release 19 proposes the following objectives as shown in Table 5.

**[Table 5]**

| |
|---|
| 1. Specify procedures and signaling method(s) to support on-demand SSB SCell operation for UEs in connected mode configured with CA, for both intra-/inter-band CA. [RAN1/2/3/4] |
| > Specify triggering method(s) (select from UE uplink wake-up-signal using an existing signal/channel, cell on/off indication via backhaul, Scell activation/deactivation signaling) |
| > Note1: On-demand SSB transmission can be used by UE for at least SCell time/frequency synchronization, L1/L3 measurements and SCell activation, and is supported for FR1 and FR2 in non-shared spectrum. |
| 2. Study procedures and signaling method(s) to support on-demand SIB1 for UEs in idle/inactive mode, including: [RAN1/2/3] |
| > Triggering method by uplink wake-up-signal using an existing signal/channel |
| > Wake-up-signal configuration provisioning to UE |
| >> Note: No modification of SSB will be discussed under this objective |
| > Information exchange between gNBs at least for the configuration of wake-up signal, if necessary |
| > Checkpoint for normative work in RAN#105 |
| 3. Specify adaptation of common signal/channel transmissions. [RAN1/2/3/4] |
| > Adaptation of SSB in time domain, e.g. adapting periodicity |
| > Adaptation of PRACH in time domain |
| > Study adaptation of PRACH in spatial domain, e.g. non-uniform PRACH resources per SSB, and specify if found beneficial |
| >> This study is to be done in 2Q'2024 only |
| > Adaptation of paging occasions including confining the paging occasions in the time domain |
| >> Note: there shall be no paging latency increase |
| > Note: there shall be no negative impact to legacy UEs, unless significant benefits are shown |
| 4. Specify the corresponding core requirements, for the above features [RAN4] |

Based on the contents described in Table 5, a method for adjusting the frequency and periodicity of PRACH is expected to be standardized.

The typical PRACH configuration information is carried in an uplink configuration common system information block (SIB) in a serving cell configuration common SIB (ServingCellConfigCommonSIB), defined in system information block 1 (SIB1). This information, in turn, is provided via a random access channel (RACH)-configuration common (RACH-ConfigCommon) in a bandwidth part (BWP)-uplink common (BWP-UplinkCommon). The number of preambles in a frame is determined by a corresponding radio resource control (RRC) message or information element (IE), and frequency information or similar parameters are configured in RACH-ConfigGeneric. These resources are determined independently or collectively according to synchronization signal blocks (SSBs) accessed by the terminal. That is, one SSB may use several preambles, and several SSBs may share one preamble.

Further, a typical NR system is configured to necessarily set one or more preambles in one frame. Although additional configuration is possible depending on the situation, the only way to avoid configuring a preamble is by not transmitting an SIB, which occurs in a cell where initial access is not possible. Therefore, the base station must perform blind detection for RACH preamble detection every frame. However, no specifics details are provided for PRACH configuration related to Network Energy Savings (NES).

To address these issues, the disclosure provides PRACH configuration and/or management schemes related to Network Energy Savings (NES) in a 3GPP NR system. For example, the base station may configure PRACH with a longer periodicity. More specifically, this disclosure provides a method for operating PRACH in synchronization with the transmission periodicity of the SSB and a method for providing assistance information related to PRACH transmission frame positions for reference by the terminal.

The disclosure provides (1) a method for configuring an adaptive PRACH, (2) a method for determining a PRACH configuration in conjunction with an SSB transmission scheme change, and (3) a method for transmitting terminal assistance information for PRACH transmission adaptation. Hereinafter, for convenience of description, each method will be described separately. However, the contents described in a specific method may be combined with those described in another method.

### (1) A method for configuring an adaptive PRACH

This method involves configuring a PRACH resource in one frame, that is, with a period greater than 20 ms, or adjusting a PRACH transmission space within that period, to reduce the RACH preamble detection complexity of a base station. To this end, the base station may perform operations such as frame aggregation in a PRACH configuration environment to adjust a period, configure multiple patterns, reduce the number of PRACH preambles used, or similar actions to reduce the complexity of blind detection. Specifically, at least one of the following information may be further configured in the PRACH information configuration.
- a RACH resource unit expressed in terms of the number of frames, a time unit, or similar parameters
- a multiple value of the new period relative to the existing period, expressed as an integer or a similar value representing the scaling of the period
- frame-related information indicating the presence of a RACH resource, expressed by a relational expression or a similar parameter according to the system frame number (SFN)
- " A new preamble value per SSB, defined in the form of "ssb-perRACH-OccasionAndCB-PreamblesPerSSB-r19" or by adding a new field value based on "ssb-perRACH-OccasionAndCB-PreamblesPerSSB.". (ssb-perRACH-OccasionAndCB-PreamblesPerSSB" specifies the number of SSBs that can map to one RACH Occasion (RO) and the number of preamble indices that can map to a single SSB.)
- information related to the allowed preamble sequence values

The foregoing information may be transferred through at least one of the following radio resource control (RRC) messages or information elements (IEs).
- RACH(random access channel)-configuration common (RACH-ConfigCommon)
- RACH-configuration generic (RACH-ConfigGeneric)
- BWP(bandwidth part)-uplink common (BWP-UplinkCommon)
- uplink configuration common (UplinkConfigCommon)
- uplink configuration common SIB(UplinkConfigCommonSIB)
- serving cell configuration common (ServingCellConfigCommon)
- serving cell configuration common SIB (ServingCellConfigCommonSIB)
- system information block 1 (SIB1)
- new RRC message/IE defined to support energy saving functionality in Release-19
- an additional type of message/IE defined in Release-19 (e.g., RACH-ConfigCommon-r19) among the above message/IE.

### (2) A method for determining a PRACH configuration in conjunction with an SSB transmission scheme change

When the transmission manner of the SSB is changed for base station power saving, the transmission manner of PRACH may also be changed accordingly. For example, the PRACH may not be transmitted in a frame or period where the SSB is not transmitted. The PRACH may be transmitted in a frame of period i where an SSB is transmitted. Alternatively, the transmission pattern of the PRACH may not be defined in a single form but may be determined in relation to the SSB transmission pattern of a specific frame. In other words, multiple PRACH transmission patterns and SSB transmission patterns may be defined, and their correlation may be specified. For example, a PRACH transmission pattern corresponding to a particular SSB transmission pattern may be defined.
1) A method for determining the PRACH periodicity when multiple SSB periodicities are configured.
   When multiple SSB periodicities are configured and managed in the form of an index, PRACH periodicity may be individually set for each index. In other words, PRACH periodicity-related information may be configured according to the number of SSB periodicity indices. This configuration may be set in a sequence format and may be transferred through at least one of the following RRC (Radio Resource Control) messages or information elements (IEs).
   - RACH-configuration common (RACH-ConfigCommon)
   - RACH-configuration generic (RACH-ConfigGeneric)
   - RACH-configuration dedicated (RACH-ConfigDedicated)
   - BWP-uplink common (BWP-UplinkCommon)
   - uplink configuration common (UplinkConfigCommon)
   - uplink configuration common SIB (UplinkConfigCommonSIB)
   - serving cell configuration common (ServingCellConfigCommon)
   - serving cell configuration common SIB (ServingCellConfigCommonSIB)
   - SIB1
   - new RRC message/IE defined to support energy saving functionality in Release-19
   an additional type of message/IE defined in Release-19 (e.g., RACH-ConfigCommon-r19) among the above message/IE.
2) A method for determining the PRACH transmission pattern when multiple SSB transmission patterns are configured
   When multiple SSB transmission patterns are configured and managed in the form of an index, the PRACH transmission pattern may be individually set for each index. In other words, PRACH transmission pattern-related information can be configured according to the number of SSB transmission pattern indices. This may take the form of multiple PRACH-ConfigurationIndex definitions or multiple definitions of "ssb-perRACH-OccasionAndCB-PreamblesPerSSB." This information may be transferred through at least one of the following RRC (Radio Resource Control) messages or information elements (IEs).
   - RACH-configuration common (RACH-ConfigCommon)
   - RACH-configuration generic (RACH-ConfigGeneric)
   - RACH-configuration dedicated (RACH-ConfigDedicated)
   - BWP-uplink common (BWP-UplinkCommon)
   - uplink configuration common (UplinkConfigCommon)
   - uplink configuration common SIB (UplinkConfigCommonSIB)
   - serving cell configuration common (ServingCellConfigCommon)
   - serving cell configuration common SIB (ServingCellConfigCommonSIB)
   - SIB1
   - new RRC message/IE defined to support energy saving functionality in Release-19
   - an additional type of message/IE defined in Release-19 (e.g., RACH-ConfigCommon-r19) among the above message/IE.

Alternatively, if a power-saving SSB pattern is configured by removing certain indices compared to the existing pattern, only the RACH occasions corresponding to the removed indices may be deactivated without requiring additional configurations.

### 3) A method for performing a single adaptation configuration between SSB and PRACH

This method enables the SSB and the PRACH to adapt through a single configuration value for Release-19 NES setting. For this purpose, an RRC message or information element, such as CommonSignalAdaptation, may be transmitted. The message or information element may be defined in a form that affects both the SSB and the PRACH simultaneously. For example, this may be a Period Scaling value applied to both. Alternatively, the configuration of the SSB non-transmission area may include a method of defining non-transmission of a PRACH mapped to an SSB in an area where the SSB is not transmitted. The corresponding non-transmission area may involve re-establishing an SSB index within a period, e.g., a transmission SSB index defined via a message such as "ssb-PositionsInBurst", or it may involve configuring a DL non-transmission area. The DL non-transmission area may, for example, depend on the configuration of the Cell DTX/DRX. To this end, it is possible to specify whether the non-transmission declaration includes the SSB when cell DTX/DRX is configured. This may include at least some of the following operations.
- No DL signals are transmitted in SSB non-transmission slots that are modified and configured to save base station power (or energy).
- No UL signals are transmitted in PRACH non-transmission slots that are modified and configured to save base station power (or energy).

### (3) A terminal assistance information transmission method for PRACH transmission adaptation

The base station may transmit assistance information for PRACH access instead of PRACH configuration information through the SIB of the frame in which the PRACH is not transmitted, allowing the terminal to easily perform preamble transmission through the RACH. Specifically, at least one of the following types of information may be sent to the terminal.
- frame/slot/symbol offset value with RACH occasion, relative to current Location
- frame value related information in which a RACH occasion is present, which is expressed by a relational expression of SFN or the like.
- a RACH resource unit expressed by the number of frames, a time unit, or the like.
- a multiple value of the new period relative to the existing period, expressed as an integer or the like representing a scaling of the period

The foregoing information may be transferred through at least one of the following radio resource control (RRC) message or information element (IE).
- RACH-configuration common (RACH-ConfigCommon)
- RACH-configuration generic (RACH-ConfigGeneric)
- RACH-configuration dedicated (RACH-ConfigDedicated)
- BWP-uplink common (BWP-UplinkCommon)
- uplink configuration common (UplinkConfigCommon)
- uplink configuration common SIB (UplinkConfigCommonSIB)
- serving cell configuration common (ServingCellConfigCommon)
- serving cell configuration common SIB(ServingCellConfigCommonSIB)
- SIB1
- new RRC message/IE defined to support energy saving functionality in Release-19
- an additional type of message/IE defined in Release-19 (e.g., RACH-ConfigCommon-r19) among the above message/IE

**FIG. 8** **shows a flowchart showing a method of operating a terminal according to an embodiment.**

Referring to FIG. 8, the terminal receives random access configuration information from a base station (S801). Then, the terminal performs a random access based on the received random access configuration information (S802). Here, the received random access configuration information may include physical random access channel (PRACH) configuration information related to energy saving.

The energy savings may be network energy savings (NES).

Meanwhile, a plurality of PRACH transmission patterns may be configured by the PRACH configuration information, and the random access may use one of the plurality of PRA CH transmission patterns. Here, for each of the plurality of PRACH transmission patterns, an association with a synchronization signal block (SSB) transmission pattern related to the NES is individually configured.

Furthermore, the PRACH configuration information may include preamble information for a synchronization signal block (SSB) related to the NES.

The random access configuration information may be received by the terminal through at least one of the following, i) a random access channel (RACH)-configuration common (RACH-ConfigCommon) radio resource control (RRC) information element (IE), ii) a RACH-configuration general (RACH- ConfigGeneric) RRC IE, iii) a bandwidth part (BWP)-uplink common (BWP-UplinkCommon) RRC IE, iv) an uplink configuration common (Uplink ConfigCommon) RRC information element, v) an uplink configuration common system information block (SIB) (UplinkConfigComminSIB) RRC IE, vi) a serving cell configuration common (ServingCellConfigCommon) RRC IE, vii) a serving cell configuration common SIB (ServingCellConfigCommenSIB) RRC IE and viii) a system information block 1 (SIB1) RRC message.

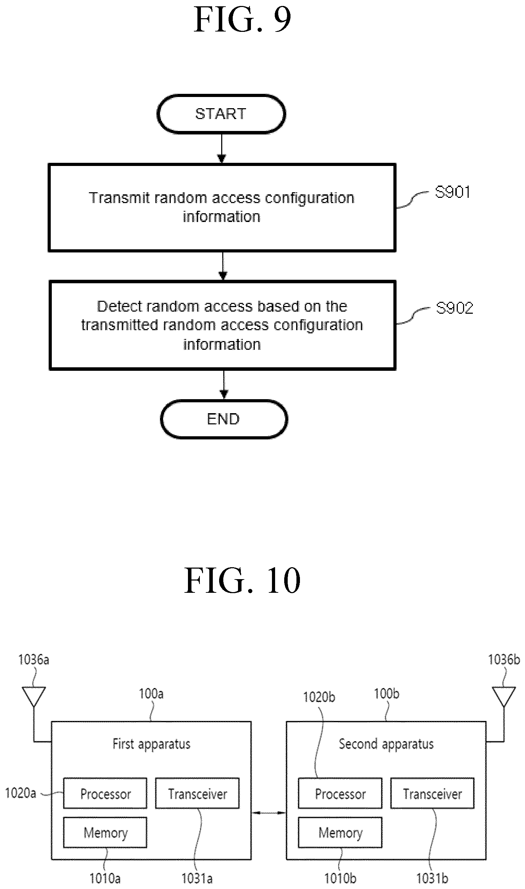

**FIG. 9** **shows a flowchart showing a method of operating a base station according to an embodiment.**

Referring to FIG. 9, the base station transmits random access configuration information to a terminal (S901). Then, the base station detects a random access based on the transmitted random access configuration information (S902). Here, the transmitted random access configuration information may include physical random access channel (PRACH) configuration information related to energy saving.

The energy savings may be network energy savings (NES).

Meanwhile, a plurality of PRACH transmission patterns may be configured by the PRACH configuration information, and the random access may use one of the plurality of PRA CH transmission patterns. Here, for each of the plurality of PRACH transmission patterns, an association with a synchronization signal block (SSB) transmission pattern related to the NES is individually configured.

Furthermore, the PRACH configuration information may include preamble information for a synchronization signal block (SSB) related to the NES.

The random access configuration information may be transmitted by the base station through at least one of the following, i) a random access channel (RACH)-configuration common (RACH-ConfigCommon) radio resource control (RRC) information element (IE), ii) a RACH-configuration general (RACH- ConfigGeneric) RRC IE, iii) a bandwidth part (BWP)-uplink common (BWP-UplinkCommon) RRC IE, iv) an uplink configuration common (Uplink ConfigCommon) RRC IE, v) an uplink configuration common system information block (SIB) (UplinkConfigComminSIB) RRC IE, vi) a serving cell configuration common (ServingCellConfigCommon) RRC IE, vii) a serving cell configuration common SIB (ServingCellConfigCommenSIB) RRC IE and viii) a system information block 1 (SIB1) RRC message.

The embodiments described up to now may be implemented through various means. For example, the embodiments may be implemented by hardware, firmware, software, or a combination thereof. Details will be described with reference to the accompanying drawings.

**FIG. 10** **is a block diagram showing apparatuses according to an embodiment of the disclosure.**

Referring to FIG. 10, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

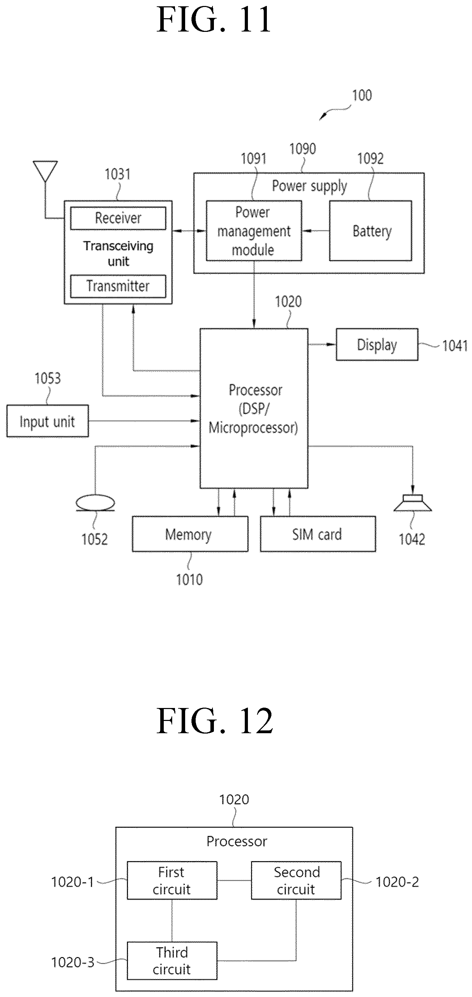

**FIG. 11** **is a block diagram showing a terminal (e.g., user equipment) according to an embodiment of the disclosure.**

In particular, FIG. 11 illustrates the previously described apparatus of FIG. 10 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 12** **is a block diagram of a processor in accordance with an embodiment.**

Referring to FIG. 12, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

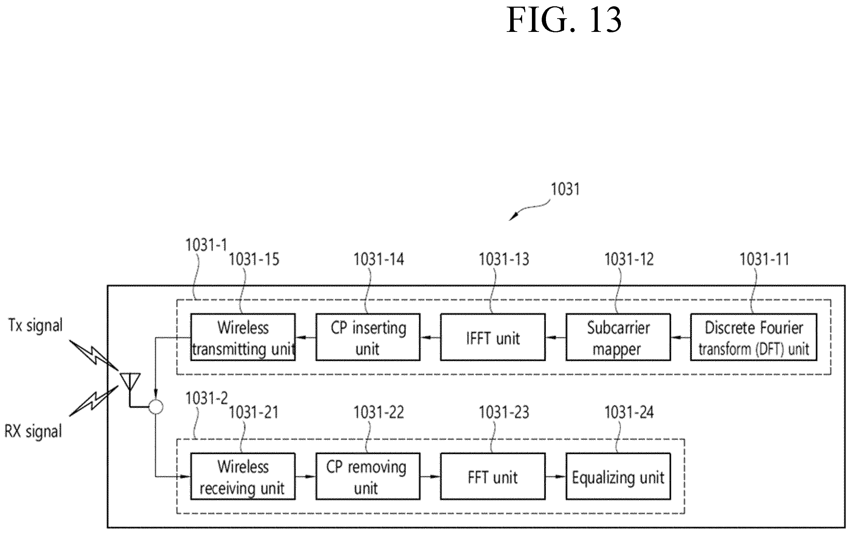

**FIG. 13** **is a detailed block diagram of a transceiver of a first apparatus shown in** **FIG. 10** **or a transceiving unit of an apparatus shown in** **FIG. 11****.**

Referring to FIG. 13, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, in an environment where a network energy savings (NES) technology is applied and the resource size of a random access channel is adjusted in a wireless communication system, successful initial random access bya terminal can be supported.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for a terminal to operate in a wireless communication system, the method comprising:
receiving random access configuration information; and
performing a random access based on the received random access configuration information;
wherein the received random access configuration information includes physical random access channel (PRACH) configuration information related to energy savings.

2. The method of claim 1, wherein the energy savings is network energy savings (NES).

3. The method of claim 2, wherein a plurality of PRACH transmission patterns are configured by the PRACH configuration information.

4. The method of claim 3, wherein the random access uses one of the plurality of PRACH transmission patterns.

5. The method of claim 3, wherein, for each of the plurality of PRACH transmission patterns, an association with a synchronization signal block (SSB) transmission pattern related to the NES is individually configured.

6. The method of claim 2, wherein the PRACH configuration information includes preamble information for a synchronization signal block (SSB) related to the NES.

7. The method of claim 1, wherein the random access configuration information is received through at least one of i) a random access channel (RACH)-configuration common (RACH-ConfigCommon) radio resource control (RRC) information element (IE), ii) a RACH-configuration general (RACH-ConfigGeneric) RRC IE, iii) a bandwidth part (BWP)-uplink common (BWP-UplinkCommon) RRC IE, iv) an uplink configuration common (Uplink ConfigCommon) RRC IE, v) an uplink configuration common system information block (SIB) (UplinkConfigComminSIB) RRC IE, vi) a serving cell configuration common (ServingCellConfigCommon) RRC IE, vii) a serving cell configuration common SIB (ServingCellConfigCommenSIB) RRC IE and viii) a system information block 1 (SIB1) RRC message.

8. A method of a base station to operate in a wireless communication system, the method comprising:
transmitting random access configuration information; and
detecting a random access based on the transmitted random access configuration information;
wherein the transmitted random access configuration information includes physical random access channel (PRACH) configuration information related to energy savings.

9. The method of claim 8, wherein the energy savings is network energy savings (NES).

10. The method of claim 9, wherein a plurality of PRACH transmission patterns are configured by the PRACH configuration information.

11. The method of claim 10, wherein the random access uses one of the plurality of PRACH transmission patterns.

12. The method of claim 10, wherein, for each of the plurality of PRACH transmission patterns, an association with a synchronization signal block (SSB) transmission pattern related to the NES is individually configured.

13. The method of claim 9, wherein the PRACH configuration information includes preamble information for a synchronization signal block (SSB) related to the NES.

14. The method of claim 8, wherein the random access configuration information is transmitted through at least one of i) a random access channel (RACH)-configuration common (RACH-ConfigCommon) radio resource control (RRC) information element (IE), ii) a RACH-configuration general (RACH-ConfigGeneric) RRC IE, iii) a bandwidth part (BWP)-uplink common (BWP-UplinkCommon) RRC IE, iv) an uplink configuration common (Uplink ConfigCommon) RRC IE, v) an uplink configuration common system information block (SIB) (UplinkConfigComminSIB) RRC IE, vi) a serving cell configuration common (ServingCellConfigCommon) RRC IE, vii) a serving cell configuration common SIB (ServingCellConfigCommenSIB) RRC IE and viii) a system information block 1 (SIB1) RRC message.

15. A terminal in a wireless communication system, comprising:
at least one processor; and
at least one memory configured to store instructions and operably electrically connectable to the at least one processor,
wherein operations performed based on the instructions executed by the at least one processor comprise:
receiving random access configuration information; and
performing random access based on the received random access configuration information;
wherein the received random access configuration information includes physical random access channel (PRACH) configuration information related to energy saving.
